## Europäisches Patentamt
## European Patent Office
## Office européen des brevets

(19)

(11) Veröffentlichungsnummer: **0 182 026**
**B1**

(12)

# EUROPÄISCHE PATENTSCHRIFT

(45) Veröffentlichungstag der Patentschrift:
**07.02.90**

(51) Int. Cl.⁴: **B29C 35/02**

(21) Anmeldenummer: **85111575.8**

(22) Anmeldetag: **13.09.85**

(54) Vulkanisierverfahren und -vorrichtung für Fahrzeugluftreifen.

(30) Priorität: **20.11.84 DE 3442303**

(43) Veröffentlichungstag der Anmeldung:
**28.05.86 Patentblatt 86/22**

(45) Bekanntmachung des Hinweises auf die Patenterteilung:
**07.02.90 Patentblatt 90/6**

(84) Benannte Vertragsstaaten:
**AT BE CH DE FR GB IT LI LU NL SE**

(56) Entgegenhaltungen:
**DE-A- 2 228 504**
**DE-A- 3 246 624**
**US-A- 2 913 765**

(73) Patentinhaber: **Continental Aktiengesellschaft,
Königsworther Platz 1, D-3000 Hannover 1(DE)**

(72) Erfinder: **Frerichs, Udo, Dipl.-Ing., Buchenweg 7,
D-3012 Langenhagen 8(DE)**
Erfinder: **Rach, Heinz-Dieter, Dipl.-Ing., Planetenring 32,
D-3008 Garbsen 1(DE)**
Erfinder: **Klose, Hans-Ulrich, Dipl.-Ing., Hauptstrasse 15,
D-3061 Wiedensahl(DE)**
Erfinder: **Boltze, Carsten, Dipl.-Ing., Langenäcker 75,
D-3013 Barsinghausen(DE)**

(74) Vertreter: **Schneider, Egon, c/o CONTINENTAL
Aktiengesellschaft Königsworther Platz 1 Postfach 169,
D-3000 Hannover 1(DE)**

## Beschreibung

Die Erfindung betrifft ein Vulkanisierverfahren für Fahrzeugluftreifen, deren Reifenwülste in montierter Stellung am radial inneren Umfang einer Felge neben sich im wesentlichen nach radial innen erstreckenden Felgenhörnern angeordnet sind, und eine Vorrichtung zur Durchführung des Verfahrens. .

Diese bekannten Reifen sind mit ihren Wülsten auf Felgensitzflächen befestigt, die am radial inneren Umfang des Felgenkranzes neben sich nach radial innen erstreckenden Felgenhörnern liegen, wie man z.B. der DE-OS 3000428 entnehmen kann. Demzufolge befinden sich die Dichtflächen, die für ein luftdichtes Anliegen der Reifenwülste an der Felge sorgen, im radial und axial äußeren Bereich der Reifenwülste, also im Reifeninnenraum.

Bei konventionellen Vulkanisiervorrichtungen werden die im Außenbereich befindlichen Reifenflächen mittels metallischer Formteile abgeformt, gegen die sie von einem im Innenraum befindlichen Blähbalg gedrückt werden. Mit einem biegsamen Blähbalg ist es jedoch nicht möglich, die beschriebenen Dichtflächen im Reifeninnenraum mit der erforderlichen glatten Oberfläche abzuformen.

In der DE-OS 3246624 wird eine Vorrichtung beschrieben, mit der Reifen der eingangs genannten Art vulkanisiert werden können. Dabei ist es jedoch erforderlich, die Reifenseitenwände und die Wülste zum Vulkanisieren in eine sogenannte Trapezstellung nach seitlich außen zu klappen, um Hinterschneidungen zu vermeiden. Durch das Vulkanisieren in Trapezstellung und das erforderliche Schwenken der Reifenseitenwände und der Wülste bei der Montage entstehen in den Seitenwänden außen erhebliche Dehnungen und innen ebensolche Stauchungen, wodurch bei mehrlagigen Karkassen die innere Karkaßlage völlig entlastet und somit fast wirkungslos werden kann. Wegen des notwendigen Schwenkvorgangs können auch kaum verstärkende Bauteile insbesondere im Wulstbereich verwendet werden. Ein so vulkanisierter Reifen kann nur unter Verspannungen auf eine Felge montiert werden, worunter die strukturelle Haltbarkeit beim Betrieb leidet.

Der Erfindung liegt deshalb die Aufgabe zugrunde, für Reifen der eingangs genannten Art ein Vulkanisierverfahren anzugeben, mit dem die Reifen so vulkanisiert werden, daß sie anschließend ohne dauerhafte Verspannungen auf eine Felge montiert werden können.

Diese Aufgabe wird erfindungsgemäß dadurch gelöst, daß die Reifen im wesentlichen fahrkonturgerecht vulkanisiert werden, daß zum Abheizen der im Reifeninnenraum liegenden Dichtflächen für ein luftdichtes Anliegen des Reifens an der Felge zwei radial geteilte, im Durchmesser veränderbare und axial verschiebbare Wulstformringe im eingefahrenen Zustand in den Innenraum des Reifenrohlings eingebracht werden, daß die Formringsegmente anschließend auf einen radialen Ringdurchmesser ausgefahren werden, mit dem die Formringe mit ihren Formflächenteilen ohne Verformung der Wülste des Rohlings axial nach außen über diese hinweggeschoben werden, daß die Formringe anschließend wieder auf ihren kleinsten Durchmesser zusammengefahren werden und danach verriegelt werden und daß schließlich der Reifen in der Vulkanisierform vulkanisiert wird. Eine Vulkanisiervorrichtung zur Durchführung des Verfahrens ist gekennzeichnet durch zwei in den Innenraum eines Reifenrohlings einbringbare radial geteilte, im Durchmesser veränderbare und axial verschiebbare Wulstformringe, deren radial innen befindlichen Formflächen die Kontur der zu verwendenden Felge im Bereich des Felgenhorns und der Sitzfläche aufweisen und die im eingefahrenen Zustand der Radialsegmente auch dem Innendurchmesser der Felge an den genannten Stellen entsprechen.

Durch die Vulkanisation in Betriebsstellung mit bevorzugt etwas vergrößerter Maulweite werden (im Gegensatz zur Vulkanisation in der Trapezstellung) jegliche schädliche Verformungen der Reifenkontur gegenüber der späteren Betriebstellung vermieden. Glatte, konturgerechte Dichtflächen im radial und axial äußeren Bereich der Reifenwülste werden mit Hilfe von Stahlringen mit glatter Oberfläche erzielt, so daß nach der Reifenmontage ein luftdichtes Anliegen der Reifenwülste an der Felge gewährleistet ist.

Da der Außendurchmesser der Formringe größer ist als der Durchmesser der Kernringe, ist für das Einbringen der Formringe in den Reifenrohling eine ovale Verformung zumindest des einen Reifenwulstes erforderlich. Zum noch besseren Einbringen können die Seitenwände des Reifenrohlings vorübergehend nach seitlich außen geklappt werden. Unter Umständen kann eine Anrollvorrichtung oder ein äußerer Andrückring (Glocke) das Einformen erleichtern bzw. verbessern. .

Nachdem sich die Formringe im Reifeninnenraum befinden, sind keine weiteren Verformungen der Wülste des Reifenrohlings erforderlich, weil durch die Verwendung radialgeteilter Formringe die Formringsegmente so weit nach radial und axial außen verschiebbar sind, daß sie ohne Behinderung durch die Reifenwülste in die hinterschnittenen Räume seitlich außen von den Reifenwülsten eingebracht werden können. Nachdem sie dort wieder auf den kleinsten Durchmesser der Formringe eingefahren worden sind, bilden sie eine in Umfangsrichtung geschlossene Formfläche ohne Unterbrechungen zwischen den einzelnen Formringsegmenten.

Durch die Verwendung von nur zwei wirksamen Innendurchmessen für die Formringe (1. kleinster Durchmesser = eingefahrener Zustand = Vulkanisierstellung, 2. größter Durchmesser = ausgefahrener Zustand) wird eine relativ einfache Ringverstellmechanik und damit ein nur geringer Platzbedarf benötigt, so daß gegebenenfalls die Ringe mit der Verstellmechanik sogar innerhalb einer Vulkanisierform untergebracht werden können.

Gemäß einer bevorzugten Ausführungsform des Verfahrens ist jedoch vorgesehen, die Formringe außerhalb der Vulkanisierform im Reifenrohling zu montieren und am Ende zu verriegeln. Nachdem die Hubvorrichtung mit der Verstellmechanik entfernt worden ist, wird der Rohling mit den Formringen mit Hilfe einer Beschickungsvorrichtung, die z.B. einen Schwenkarm mit Zange aufweisen kann, in die geöffnete Heizpresse eingebracht und dort positioniert. Es ergibt sich der Vorteil, daß die außerhalb verbleibende Verstellmechanik nicht dauernd auf Vulkanisationstemperatur erwärmt wird.

Bei Verwendung von nur einem Paar von Heizringen, die unmittelbar nach dem Vulkanisieren eines Reifens in den nächsten Rohling eingelegt werden, erhält man den Vorteil, daß die Formringe zwischen den einzelnen Heizperioden nicht wesentlich abkühlen. Es kann jedoch günstiger sein, zwei Paar Heizringe zu verwenden, weil dann zwischen den einzelnen Heizperioden keine so langen Standzeiten mit geöffneter Vulkanisierform mehr auftreten.

Nachfolgend wird ein Ausführungsbeispiel der Erfindung anhand einer Zeichnung beschrieben.

Es zeigt

Fig. 1 ein Formringpaar im axial und radial zusammengefahrenen Zustand, das bereits in dem Innenraum eines Reifenrohlings eingebracht worden ist, in einem radialen Teilschnitt,

Fig. 2 das Formringpaar im radial und axial ausgefahrenen Zustand und seine Zuordnung zu den Reifenwülsten,

Fig. 3 ein Formringpaar im radial eingefahrenen und axial ausgefahrenen Zustand (Vulkanisierstellung) und einen Reifenrohling, dessen Wülste in dieser Stellung fixiert werden, in einem radialen Teilschnitt.

Fig. 4 eine Vulkanisierform mit eingeführtem Reifenrohling in einem radialen Teilschnitt.

Der Reifenrohling ist in üblicher Weise aufgebaut, so daß er ein Laufband 1, Seitenwände 2 und Reifenwülste 3 mit darin gelagerten Wulstkernen 4 aufweist. Eine nicht gezeichnete Karkasse ist in den Wülsten 3 durch Umschlingen der Wulstkerne 4 verankert, und radial außen von der Karkasse kann sich ein zugfester Gürtel befinden.

Zum Abformen von Dichtflächen 5 am Reifenrohling, die später ein luftdichtes Anliegen der Reifenwülste 3 an einer Felge im Bereich der radial innen liegenden Felgensitzfläche und des sich nach radial innen erstreckenden Felgenhorns gewährleisten, dienen zwei bevorzugt aus Stahl bestehende Wulstformringe 6, die aus radial verschiebbaren Segmenten 7 aufgebaut sind und die ebenfalls in axialer Richtung relativ zueinander bewegbar sind. Die z.B. aus je acht Radialsegmenten 7 bestehenden Wulstformringe 6 sind an einer stabilen (nur teilweise gezeichneten) Hubvorrichtung befestigt. Für eine radiale Verschiebbarkeit können die Radialsegmente 7 z.B. in Schwalbenschwanzführungen von zwei Führungsringscheiben 8 gelagert sein, während letztere sich mit Hilfe eines Führungszylinders 9 oder von Führungsstangen der Hubvorrichtung in axialer Richtung verschieben lassen. Das radiale Verschieben der Radialsegmente 7 und das axiale Verschieben der gesamten Formringe 6 kann mit bekannten Mitteln, z.B. mit Keilen, Konen, Steuernocken, Konturscheiben u.s.w., pneumatisch oder hydraulisch erfolgen. Wichtig ist, daß im eingefahrenen Zustand der Radialsegmente 7, in dem die Formringe 6 den kleinsten möglichen Durchmesser einnehmen, die radial innen befindlichen Formflächen 10 über den gesamten Umfang eine geschlossene Fläche bilden, d.h. daß sich zwischen den Radialsegmenten 7 keine Spalte mehr befinden. Im ausgefahrenen Zustand der Radialsegmente 7 bilden diese einen so großen Formringinnendurchmesser, daß sie im Innenraum des Reifenrohlings ungehindert über die Wülste 3 hinweg nach seitlich außen verschoben werden können, um dann durch radiales Einfahren an die abzuformenden Dichtflächen 5 herangeführt werden zu können.

Im axial zusammengefahrenen Zustand liegen die Führungsringscheiben 8 entweder unmittelbar nebeneinander oder doch so dicht benachbart, daß sich allenfalls Teile eines Blähbalgs 11 zwischen innen befinden.

Nachfolgend wird das erfindungsgemäße Verfahren näher beschrieben.

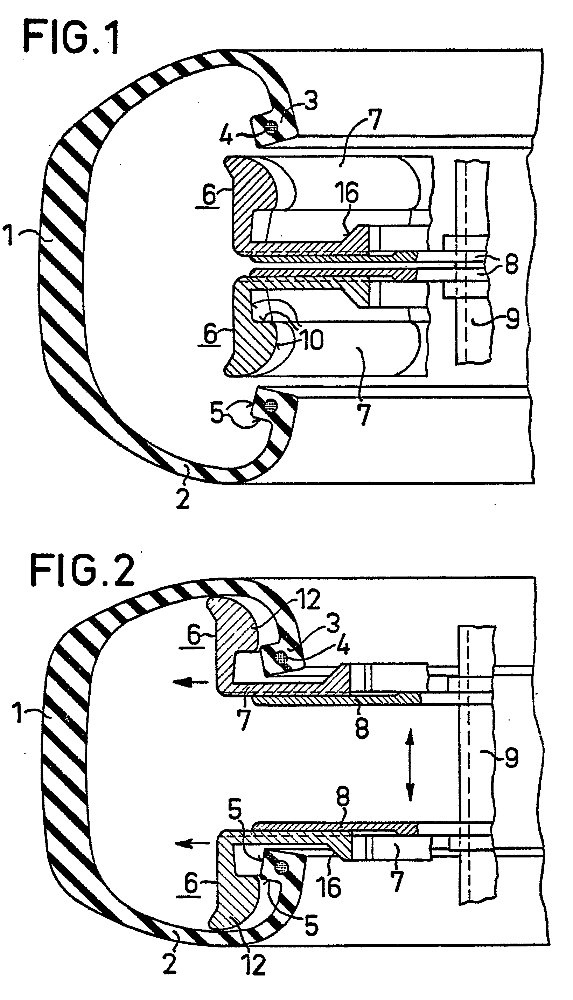

Zunächst werden die Wulstformringe 6 im radial eingefahrenen und axial zusammengefahrenen Zustand in den Innenraum eines Reifenrohlings eingebracht. Dazu ist es erforderlich, den einen Reifenwulst 3 geringfügig oval zu verformen, wobei diese Verformung um so niedriger ausfällt, je kleiner die Bauhöhe der Formringe 6 gewählt ist. Zum noch einfacheren Einbringen der Formringe 6 kann es günstig sein, die Seitenwände 2 des Reifenrohlings etwas nach seitlich außen zu klappen (Fig. 1). Auch kann es unter Umständen zweckmäßig sein, die Wulstformringe 6 einzeln nacheinander in den Innenraum des Reifenrohlings einzubringen. Die Hubvorrichtung müßte dann entsprechend angepaßt sein.

Im Innenraum des Reifenrohlings werden die Formringsegmente 7 radial nach außen gefahren und gleichzeitig oder nachfolgend die Formringe 6 in axialer Richtung auseinander gefahren, bis die Radialsegmente 7 mit ihren axial außen und radial innen liegenden Vorsprüngen 12 die Reifenwülste 3 überwunden haben (Heizmaulweite, Fig. 2).

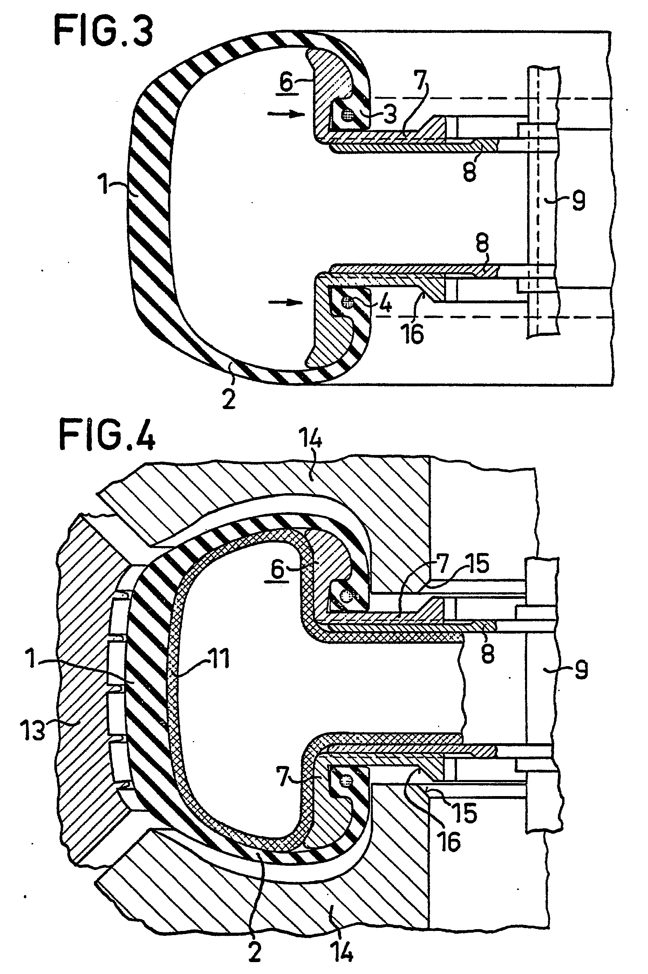

Anschließend werden die Radialsegmente 7 wieder auf den kleinsten Durchmesser der Formringe 6 eingefahren (Fig. 3) und in dieser Stellung mit Hilfe von bekannten Mitteln verriegelt. Gegebenenfalls kann eine Einrollvorrichtung, ähnlich der in der älteren Patentanmeldung P 3334203.2 beschriebenen Montagevorrichtung dazu dienen, den Einformvorgang zu erleichtern bzw. den Sitz des Reifenrohlings auf den Wulstformringen 6 zu verbessern. Die bisherigen Verfahrensschritte werden bevorzugt außerhalb von einer Vulkanisierform durchgeführt, weil dort ein günstigeres Platzangebot für die Hubvorrichtung mit ihren Antriebsund Steuerelementen vorherrscht. Nachdem der Reifenrohling mit den Formringen 6 von der Hubvorrichtung gelöst worden ist, z.B. durch senkrechtes Herausfahren der Hubvorrichtung, wird er mit Hilfe einer bekannten Beschickungsvorrichtung (z.B. Schwenkarm mit Zange) in eine geöffnete Vulkanisierform eingebracht und dort positioniert.

Die Vulkanisierform weist gemäß Fig. 4 über den Reifenumfang verteilt angeordnete, gewöhnlich radial bewegbare Segmente 13 auf, an die sich axial verschiebbare Seitenschalen 14 anschließen. Es ist besonders günstig, die Seitenschalen 14 mit Zentrierungsflächen 15 zu versehen, die beim Schließen der Vulkanisierform auf zugeordnete Führungsflächen 16 an den Formringen 6 auflaufen und so eine exakte Zentrierung des Reifenrohlings bewirken. In der Regel enthält die Vulkanisierform noch einen mit einem Heizmedium beaufschlagbaren Blähbalg 11, der während des Vulkanisierens den Reifenrohling gegen die Radialsegmente 13 und die Seitenschalen 14 der Vulkanisierform drückt. Bei Bedarf kann jedoch auch balglos geheizt werden. Nach dem Vulkanisieren geschieht die Entformung des Reifens in umgekehrter Reihenfolge. Bei Bedarf können die Formringe 6 selbstverständlich auch aus einem anderen Metall als Stahl oder auch aus einem wärmeverträglichen Kunststoff hergestellt sein.

**Patentansprüche**

1. Vulkanisierverfahren für Fahrzeugluftreifen, deren Reifenwülste (3) in montierter Stellung am radial inneren Umfang einer Felge neben sich im wesentlichen nach radial innen erstreckenden Felgenhörnern angeordnet sind, dadurch gekennzeichnet, daß die Reifen im wesentlichen fahrkonturgerecht vulkanisiert werden, daß zum Abheizen der im Reifeninnenraum liegenden Dichtflächen (5) für ein luftdichtes Anliegen des Reifens an der Felge zwei radial geteilte, im Durchmesser veränderbare und axial verschiebbare Wulstformringe (6) im radial eingefahrenen Zustand in den Innenraum des Reifenrohlings eingebracht werden, daß die Formringsegmente (7) anschließend auf einen radialen Ringdurchmesser ausgefahren werden, mit dem die Formringe (6) mit ihren Formflächenteilen (10) ohne Verformung der Wülste (3) des Rohlings axial nach außen über diese hinweggeschoben werden, daß die Formringe (6) anschließend wieder auf ihren kleinsten Durchmesser zusammengefahren und danach verriegelt werden, daß schließlich der Reifen in der Vulkanisierform vulkanisiert wird.

2. Verfahren nach Anspruch 1, dadurch gekennzeichnet, daß während der Vulkanisation die Wulstformringe (6) zentriert werden.

3. Verfahren nach Anspruch 1, dadurch gekennzeichnet, daß die Wulstformringe (6) außerhalb der Vulkanisierform in den Reifenrohling eingebracht werden und daß sie danach gemeinsam mit dem Reifenrohling in die Vulkanisierform eingelegt werden.

4. Verfahren nach Anspruch 1, dadurch gekennzeichnet, daß zwei Formringpaare (6) eingesetzt werden, so daß während der Vulkanisation eines Reifenrohlings der nächste bereits mit Formringen versehen wird.

5. Vulkanisiervorrichtung zur Durchführung des Verfahrens nach Anspruch 1, die übliche Formteile zur Abformung der Außenflächen des Reifenrohlings aufweist, nämlich im Falle einer radial geteilten Form Radialsegmente (13) und Seitenschalen (14), gekennzeichnet durch zwei in den Innenraum eines Reifenrohlings einbringbare radial geteilte, im Durchmesser veränderbare und axial verschiebbare Wulstformringe (6), deren radial innen befindliche Formflächen (10) die Kontur der zu verwendenden Felge im Bereich des Felgenhorns und der Sitzfläche aufweisen und die im eingefahrenen Zustand der Radialsegmente (7) auch dem Innendurchmesser der Felge an den genannten Stellen entsprechen.

6. Vorrichtung nach Anspruch 5, gekennzeichnet durch Führungsmittel (8) für eine Radialführung der Formringsegmente (7).

7. Vorrichtung nach Anspruch 5, gekennzeichnet durch Verriegelungsmittel zur Verriegelung der Formringsegmente (7) im radial eingefahrenen Zustand.

8. Vorrichtung nach Anspruch 5, gekennzeichnet durch eine Hub-, Antriebs- und Steuervorrichtung für die Formringe (6).

9. Vorrichtung nach Anspruch 5, gekennzeichnet durch Zentrierungsmittel (15, 16), mit denen die Formringe (6) durch das Heranfahren von Seitenschalen (14) der Vulkanisierform zentrierbar sind.

10. Vorrichtung nach Anspruch 5, dadurch gekennzeichnet, daß die Formringe (6) aus Stahl hergestellt sind.

11. Vorrichtung nach Anspruch 5, dadurch gekennzeichnet, daß die Formringe (6) aus einem anderen Metall als Stahl oder aus Kunststoff hergestellt sind.

**Claims**

1. Vulcanising method for pneumatic vehicle tyres, the tyre beads (3) of said tyres being disposed on the radially inner circumference of a rim when they are in their assembled position adjacent to rim flanges which extend substantially radially inwardly, characterised in that the tyres are vulcanised in a manner which substantially corresponds to the travel configuration, in that, in order to heat the sealing surfaces (5) situated in the interior of the tyre so that the tyre can abut against the rim in an air-tight manner, two radially split bead moulding rings (6) are inserted in their radially retracted state into the interior of the tyre blank, such rings having variable diameters and being axially displaceable, in that the moulding ring segments (7) are subsequently extended to a radial ring diameter at which the moulding rings (6), together with their moulding surface portions (10), are axially outwardly pushed beyond the beads (3) of the blank without deforming said beads, in that the moulding rings (6) are subsequently brought together again to their smallest diameter and are thereafter locked, and in that, finally, the tyre is vulcanised in the vulcanising mould.

2. Method according to claim 1, characterised in that, during vulcanisation, the bead moulding rings (6) are centered.

3. Method according to claim 1, characterised in that the bead moulding rings (6) outside of the vulcanising mould are inserted into the tyre blank, and in that they are then inserted into the vulcanising mould together with the tyre blank.

4. Method according to claim 1, characterised in that two pairs of moulding rings (6) are used so that, during vulcanisation of one tyre blank, the next tyre blank is already provided with moulding rings.

5. Vulcanising device for performing the method according to claim 1, which comprises conventional moulding component parts for moulding the external surfaces of the tyre blank, namely radial segments (13) and lateral shells (14) in the case of a radially split mould, characterised by two radially split bead moulding rings (6), such rings having variable diameters and being axially displaceable, the moulding surfaces (10) of said rings, which are situated radially internally, having the configuration of the rim to be used in the region of the rim flange and of the seating surface and, when the radial segments (7) are in their retracted state, the bead moulding rings also correspond to the inner diameter of the rim at the above-described locations.

6. Device according to claim 5, characterised by guide means (8) for a radial guidance of the moulding ring segments (7).

7. Device according to claim 5, characterised by locking means for locking the moulding ring segments (7) in their radially retracted state.

8. Device according to claim 5, characterised by a lifting, driving and controlling device for the moulding rings (6).

9. Device according to claim 5, characterised by centering means (15, 16), whereby the moulding rings (6) are centerable by the coming-together of lateral shells (14) of the vulcanising mould.

10. Device according to claim 5, characterised in that the moulding rings (6) are made of steel.

11. Device according to claim 5, characterised in that the moulding rings (6) are formed from a metal other than steel or from a plastics material.

## Revendications

1. Procédé de vulcanisation pour pneus de véhicule, dont, à l'état monté, les bourrelets (3) sont disposés contre la périphérie, radialement intérieure, d'une jante, à côté des bords de la jante qui s'étendent sensiblement radialement vers l'intérieur, caractérisé en ce que l'on vulcanise les pneus sensiblement selon le contour de roulement; en ce que, pour chauffer les surfaces d'étanchéité (5), situées dans l'espace intérieur du pneu, pour un appui, étanche à l'air, du pneu contre la jante, on introduit dans l'espace intérieur de l'ébauche du pneu, à l'état radialement rétracté, deux anneaux (6) de formage des bourrelets, qui sont divisés radialement, dont on peut modifier le diamètre et que l'on peut faire coulisser axialement; en ce qu'ensuite on amène en extension les segments (7) des anneaux de forme pour les amener à un diamètre d'anneau, mesuré radialement, pour lequel on fait coulisser les anneaux (6) de formage, avec leurs parties (10) de surface de formage, sans déformation des bourrelets (3) de l'ébauche du pneu, axialement vers l'extérieur au-delà de ces bourrelets; en ce que l'on ramène ensuite à nouveau les anneaux de formage (6) à leur plus petit diamètre et qu'on les y verrouille; en ce qu'enfin on vulcanise le pneu dans le moule de vulcanisation.

2. Procédé selon la revendication 1, caractérisé en ce que pendant la vulcanisation les anneaux (6) de formage des bourrelets sont centrés.

3. Procédé selon la revendication 1, caractérisé en ce que l'on introduit les anneaux (6) de formage des bourrelets dans l'ébauche du pneu en dehors du moule de vulcanisation et en ce qu'on les place ensuite ensemble, avec l'ébauche du pneu, dans le moule de vulcanisation.

4. Procédé selon la revendication 1, caractérisé en ce que l'on met en œuvre deux paires d'anneaux (6) de formage, de façon que, pendant la vulcanisation d'une ébauche de pneu, la suivante soit déjà équipée des anneaux de formage.

5. Dispositif de vulcanisation pour l'exécution du procédé selon la revendication 1, qui présente les pièces de formage usuelles pour le formage des surfaces extérieures de l'ébauche du pneu, c'est-à-dire, dans le cas d'un moule divisé radialement, des segments radiaux (13) et des coques latérales (14), caractérisé par deux anneaux (6) de formage des bourrelets que l'on peut introduire dans l'espace intérieur d'une ébauche de pneu, qui sont divisés radialement, dont on peut modifier le diamètre, que l'on peut faire coulisser axialement, dont les surfaces (10) de formage qui se trouvent radialement à l'intérieur présentent le contour de la jante à employer dans la zone du bord et de la surface d'assise de la jante et qui, à l'état rétracté des segments radiaux (7), correspondent également aux diamètre intérieur de la jante aux endroits mentionnés.

6. Dispositif selon la revendication 5, caractérisé par des moyens (8) de guidage radial des segments (7) de l'anneau de formage.

7. Dispositif selon la revendication 5, caractérisé par des moyens pour le verrouillage des segments (7) de l'anneau de formage dans l'état rétracté radialement.

8. Dispositif selon la revendication 5, caractérisé par un dispositif de levage, d'entraînement et de commande pour les anneaux de formage (6).

9. Dispositif selon la revendication 5, caractérisé par des moyens de centrage (15, 16) avec lesquels les anneaux de formage (6) peuvent être centrés lors de l'approche des coques latérales (14) du moule de vulcanisation.

10. Dispositif selon la revendication 5, caractérisé en ce que les anneaux de formage (6) sont fabriqués en acier.

11. Dispositif selon la revendication 5, caractérisé en ce que les anneaux de formage (6) sont fabriqués en métal autre que l'acier ou en plastique.

FIG.1

FIG.2

FIG.3

FIG.4